# EUROPEAN PATENT SPECIFICATION

(11) **EP 3 076 631 B1**
(45) Date of publication and mention of the grant of the patent: **22.01.2020**
(21) Application number: 15196625.6
(22) Date of filing: 26.11.2015
(51) Int. Cl.: H04L 29/06, H04L 29/08

(54) **SYSTEM AND METHOD OF IMPROVED LAWFUL INTERCEPTION OF SEAMLESS DATA SESSION CONTINUITY ACROSS HETEROGENEOUS NETWORKS**
SYSTEM UND VERFAHREN ZUM VERBESSERTEN LEGALEN ABFANGEN VON NAHTLOSER DATENSITZUNGSKONTINUITÄT ZWISCHEN HETEROGENEN NETZWERKEN
SYSTÈME ET PROCÉDÉ D'INTERCEPTION LÉGALE AMÉLIORÉE DE LA CONTINUITÉ D'UNE SESSION DE DONNÉES SANS COUPURE DANS DES RÉSEAUX HÉTÉROGÈNES

(30) Priority: 31.03.2015 IN 1716CH2015; 23.06.2015 US 201514748169
(43) Date of publication of application: 05.10.2016
(73) Proprietor: Wipro Limited, 560 035 Karnataka (IN)
(72) Inventor: SEETHARAMAN, Swaminathan, 600044 Tamil Nadu (IN); JAYARAMAN, Venkata Subramanian, 600051 Tamil Nadu (IN)
(74) Representative: Finnegan Europe LLP

(56) References cited:
- WO-A1-2013/144669
- US-A1- 2013 326 631

## Description

### Technical Field

This disclosure relates generally to lawful interception across heterogeneous networks and more particularly to a system and method of improved lawful interception of seamless data session continuity across heterogeneous networks.

### Background

Heterogeneous networks may be increasingly deployed around the world to offload traffic to address capacity and coverage issues. Technologies such as IP Flow Mobility and Seamless Offload IFOM (3GPP TS 23.261) may enable seamless mobility or transfer of IP data flows from one network to another. Data offloading or transfer of data flows may happen at the radio access network level (e.g., LTE to Wi Fi or Small Cell), or to avoid passing via the core network components (e.g., local IP access (LIPA), selected IP traffic offload (SIPTO) - refer 3GPP TR 23.829).

Typically, during handover to a destination network of a target user, there may be an abrupt change in the nodes that send the signaling and media information. There may be a discontinuity or defect/misalignment in the transmission of signaling and media information to a lawful interception gateway (LIG). There may also be out of sequence arrival of media packets or signaling packets at the LIG leading to incorrect lawful interception (LI) information. The unique address and the protocol of communication may change during user mobility across heterogeneous networks leading to incorrect LI information. Further, due to the difference in capabilities of the involved target user's networks, the packet content format may change when a handover from a source communication network to a destination communication network occurs. This may lead to difficulties for the LIG to interpret the LI information, thus leading to ineffective LI.

WO 2013/144669 A1 discloses a system and a method for lawful interception in voice call continuity (VCC) for telecommunications networks. The data associated with a registered telecommunication network user, i.e., target user, coming from a first telecommunication network is intercepted by a VCC gateway and sent to the law enforcement agency (LEA) in a format desired by the LEA. Once the target user moves to a second telecommunication network, the data associated with the target user coming from the second telecommunication network is intercepted by the VCC gateway and sent to the LEA in the format desired by the LEA.

### SUMMARY

In one embodiment, a session continuity server device for lawful interception of seamless data session continuity across heterogeneous networks is disclosed. The session continuity server device may comprise a memory and a processor coupled to the memory storing processor executable instructions which when executed by the processor causes the processor to perform operations comprising: receiving one or more first data packets associated with an ongoing data session from a source communication network, wherein the one or more first data packets include at least one of signaling and media content; detecting a handover of the ongoing data session from the source communication network to a destination communication network; receiving one or more second data packets associated with the ongoing data session from the destination communication network in response to detecting the handover of the ongoing session, wherein the one or more second data packets include at least one of signaling and media content; maintaining continuity and sequence of the first data packets and the second data packets associated with the ongoing data session, wherein maintaining comprises removing duplicative packets in the at least one of signaling and media content in the one or more first data packets and the one or more second data packets associated with the ongoing session; and delivering the first data packets and the second data packets associated with the ongoing data session as the lawful interception data to a law enforcement agency (LEA).

In another embodiment, a method for providing data session continuity across one or more communication networks for a lawful interception is disclosed. The method comprises: receiving one or more first data packets associated with an ongoing data session from a source communication network, wherein the one or more first data packets include at least one of signaling and media content; detecting a handover of the ongoing data session from the source communication network to a destination communication network; receiving one or more second data packets associated with the ongoing data session from the destination communication network in response to detecting the handover of the ongoing session, wherein the one or more second data packets include at least one of signaling and media content; maintaining continuity and sequence of the first data packets and the second data packets associated with the ongoing data session, wherein maintaining comprises removing duplicative packets in the at least one of signaling and media content in the one or more first data packets and the one or more second data packets associated with the ongoing session; and delivering the first data packets and the second data packets associated with the ongoing data session as the lawful interception data to a law enforcement agency (LEA).

There is also provided a non-transitory computer readable medium including instructions stored thereon that when processed by at least one processor cause a lawful interception device to perform operations comprising: receiving one or more first data packets associated with an ongoing data session from a source communication network, wherein the one or more first data packets include at least one of signaling and media content; detecting a handover of the ongoing data session from the source communication network to a destination communication network; receiving one or more second data packets associated with the ongoing data session from the destination communication network in response to detecting the handover of the ongoing session, wherein the one or more second data packets include at least one of signaling and media content; maintaining continuity and sequence of the one or more first data packets and the one or more second data packets associated with the ongoing data session, wherein maintaining comprises removing duplicative packets in the at least one of signaling and media content in the one or more first data packets and the one or more second data packets associated with the ongoing session; and delivering the one or more first data packets and the one or more second data packets associated with the ongoing data session as the lawful interception data to a law enforcement agency (LEA).

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates an exemplary block diagram of an environment for lawful interception in which various embodiments of the present disclosure may function.
**FIG. 2** illustrates a block diagram of a memory of a session continuity server device in accordance with some embodiments of the present disclosure.
**FIG. 3** illustrates an exemplary flow diagram of a method of providing a lawful interception (LI) continuity across one or more communication networks for an ongoing data session.
**FIG. 4** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

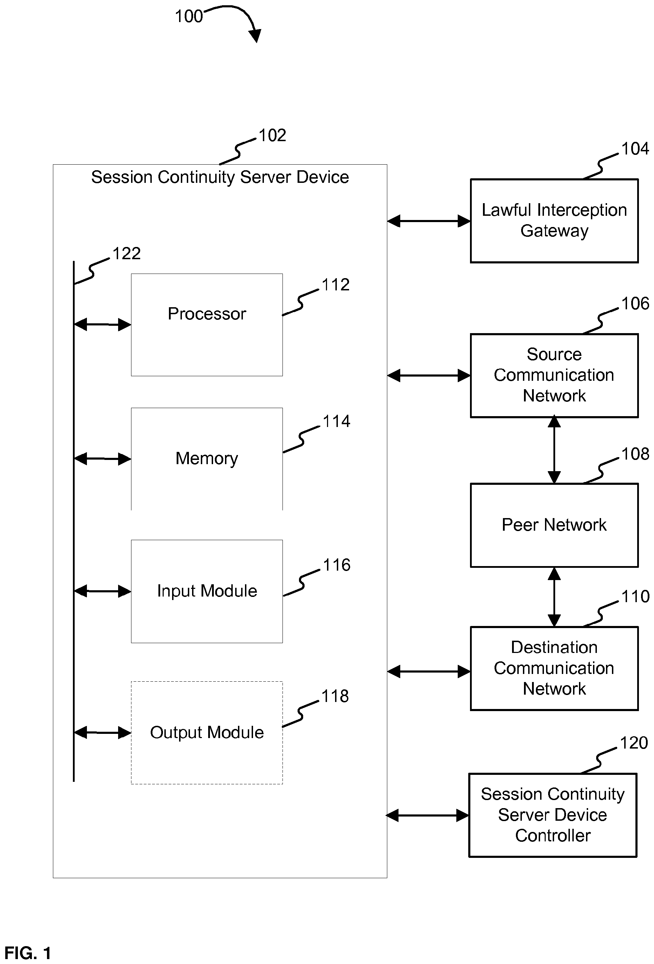

**FIG. 1** illustrates an exemplary block diagram for an environment 100 for lawful interception in which various embodiments of the present disclosure may function. The exemplary environment 100 may include a session continuity server device (SCSD) 102, a lawful interception gateway 104, a source communication network 106, a peer network 108, a destination communication network 110 and a session continuity server device controller 120. While not shown, the exemplary environment 100 may include additional components, such as a database etc which are well known to those of ordinary skill in the art and thus will not be described here. The SCSD 102 may provide a lawful interception continuity across one or more communication networks for an ongoing data session. The session continuity server device controller 120 may assist the session continuity server device 102 to provide a lawful interception continuity across one or more communication networks for an ongoing data session.

The session continuity server device 102 may further include at least one processor 112, a memory 114, an input module 116, and an output module 118, which may be coupled together by bus 122 .The input module 116 may receive one or more data packets from one or more communication networks. The output module 118, may link the session continuity server device 102 with peripheral devices such as lawful interception gateway (LIG) 104 and the session continuity server device controller 120. The output module 118 may send one or more data packets from the one or more communication networks to the LIG 104.

Processor(s) 112 may execute one or more computer-executable instructions stored in the memory 114 for the methods illustrated and described with reference to the examples herein, although the processor(s) can execute other types and numbers of instructions and perform other types and numbers of operations. The processor(s) 112 may comprise one or more central processing units ("CPUs") or general purpose processors with one or more processing cores, such as AMD® processor(s), although other types of processor(s) could be used (e.g., Intel®).

The memory 114 may comprise one or more tangible storage media, such as RAM, ROM, flash memory, CD-ROM, floppy disk, hard disk drive(s), solid state memory, DVD, or other memory storage types or devices, including combinations thereof, which are known to those of ordinary skill in the art. The memory 114 may store one or more non-transitory computer-readable instructions of this technology as illustrated and described with reference to the examples herein that may be executed by the one or more processor(s) 112.

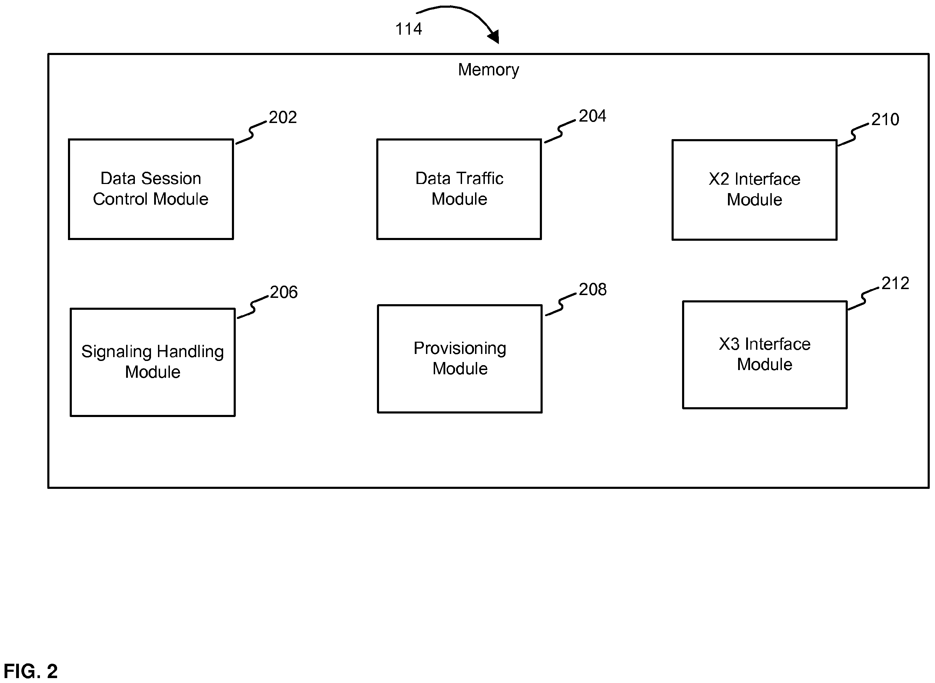

**FIG. 2** illustrates memory 114 which may include a data session control module (DSCM) 202, data traffic module 204, signal handling module 206, provisioning module 208, X2 interface module 210 and X3 interface module 212. The source communication network 106 may contact data session control module 202 to obtain instructions regarding initiation of lawful interception (LI). The source communication network 106 may also send an identity of the source communication network 106 to SCSD 102. The identity of the source communication network 106 may be received by the data session control module (DSCM) 202. Upon receiving the identity of the source communication network, the SCSD 102 may determine the one or more network properties associated with the source communication network 106. The one or more network properties may be type of seamless data session, identity of a content duplication function (CDF), and capabilities of the source communication network 106. The DSCM 202 may send the identity of the source communication network 106 to session continuity server device controller (SCSDC) 120 to determine the capabilities of the source communication network 106 and the content duplication function for performing media content duplication for LI. The SCSDC 120 may send the one or more network properties such as identity of the content duplication function and the entity in the source communication network 106 controlling it, capabilities of the source communication network 106 and type of seamless data session mobility allowed based on the identity of the source communication network 106 back to the SCSD 102. Upon receiving the one or more network properties associated with the source communication network 106, the DSCM 202 may determine the requirement to be in route of the lawful interception gateway. The DSCM 202 may determine the requirement to collect the one or more first data packets associated with the ongoing data session from the source communication network 106 and send it to the lawful interception gateway 104. The DSCM 202 may also use one or more provisioning conditions from the provision module 208 to determine the requirement to be in route of the lawful interception gateway 104. The one or more provision conditions may be (a) when the target user's device as well as the source communication network 106 are capable of seamless data session handover (seamless flow mobility) such as IP flow mobility and seamless offload (IFOM) supported, local IP access (LIPA) enabled or (b) when the target user's network is capable of seamless data session handover (seamless flow mobility) such as IFOM enabled, proxy mobile IPv6 (PMIPv6) supported or (c) for all data sessions involving the target user. The DSCM 202 may send the content duplication function (CDF) associated with the ongoing data session to the source communication network 106 for initiation of lawful interception (LI). Upon receiving the identity of the content duplication function (CDF), the source communication network 106 may send the one or more first data packets associated with the ongoing data session from the target user to SCSD 102. The one or more data packets associated with the ongoing data session may be at least one of signaling and media content. The data traffic module 204 may receive media content from the one or more first data packets for lawful interception (LI). The signaling handling module 206 may receive signaling content from the one or more first data packets for lawful interception (LI).

The SCSD 102 may detect a handover of the ongoing data session from the source communication network 106 to a destination communication network 110. The ongoing data session may be handed over to the destination network 110. The handover may be due to reasons such as movement of the target user, offloading policy of the source communication network 106, or changes in conditions of the source communication network 106. During the handover of the ongoing data session to the destination communication network 110, the source communication network 106 may contact the SCSD 102 to obtain instructions regarding continuation of LI after the handover of the ongoing data session. The source communication network 106 may also send the identity of the destination communication network 110 to the DSCM 202.

Upon receiving the identity of the destination communication network 110 the SCSD 102 may determine the one or more network properties associated with the destination communication network 110. The one or more network properties may be identity of a content duplication function (CDF), and/or capabilities of the destination communication network 110. The DSCM 202 in the SCSD 102 may send the identity of the destination communication network 110 to SCSDC 120 to determine the capabilities of the destination communication network 110, and the content duplication function for performing media content duplication for LI. The SCSDC 120 may send the one or more network properties such as identity of the content duplication function and the entity in the destination communication network 110 controlling it, and the capabilities of the destination communication network 110. The DSCM 202 may send the identity of the content duplication function for the ongoing data session to the destination communication network 110. Based on the content duplication function, the destination communication network 110 may send the one or more second data packets associated with the ongoing data session from the target user to SCSD 102. The source communication network 106 may send an acknowledgement to the DSCM 202 that the one or more first data packets associated with the ongoing data session have been successfully sent to the SCSD 102. The data traffic module 204 may receive media content from the one or more second data packets for lawful interception (LI). The signaling handling module 206 may receive signaling content from the one or more second data packets for lawful interception (LI).

The data traffic module 204 may correlate the information received from the different CDFs using a common identifier that is present in the media packets. The data traffic module 204 may maintain continuity and sequence of media content in the one or more first data packets and the one or more second data packets associated with the ongoing data session. The data traffic module 204 may remove duplicate packets in the media content in the one or more first data packets and the one or more second data packets associated with the ongoing data session. The data traffic module 204 may ensure that the media content in the one or more first data packets associated with the ongoing data session have been successfully received from the source communication network 106 entirely. The data traffic module 204 may retrieve from the source communication network 106 missing media content in the one or more first data packets associated with the ongoing data session that were not received by the data traffic module 204 before receiving the acknowledgement from the source network 106 that the one or more first data packets associated with the ongoing data session have been successfully sent to the SCSD 102. The data traffic module 204 may update media packet headers such as IP address, transport protocol of the media content in the one or more first data packets and the one or more second data packets associated with the ongoing data session. The data traffic module 204 may update the format such as the codec of the media content in the one or more first data packets and the one or more second data packets associated with the ongoing data session.

The signaling handling module 206 may maintain continuity and sequence of signaling content in the one or more first data packets and the one or more second data packets associated with the ongoing data session. The signaling handling module 206 may wait for a preconfigured time duration for DSCM 202 to receive the acknowledgement from the source communication network 106 that the one or more first data packets associated with the ongoing data session have been successfully sent. The signaling handling module 206 may maintain continuity and sequence of signal content in the one or more first data packets and the one or more second data packets associated with the ongoing data session. The signaling handling module 206 may remove duplicate packets in the signal content in the one or more first data packets and the one or more second data packets associated with the ongoing data session. The signaling handling module 206 may ensure that the signaling content in the one or more first data packets associated with the ongoing data session has been successfully received from the source communication network 106 entirely. The signaling handling module 206 may retrieve from the source communication network 106 missing signaling content in the one or more first data packets associated with the ongoing data session that were not received by the signaling handling module 206 before receiving the acknowledgement from the source network 106 that the one or more first data packets associated with the ongoing data session have been successfully sent to the SCSD 102.The signaling handling module 206 may update the format such as the transport protocol in the one or more first data packets and the one or more second data packets associated with the ongoing data session.

X2 interface module 210 may send the signaling content in the one or more first data packets and the one or more second data packets associated with the ongoing data session to the LIG 104.

X3 interface module 212 may send the media content in the one or more first data packets and the one or more second data packets associated with the ongoing data session to the LIG 104.

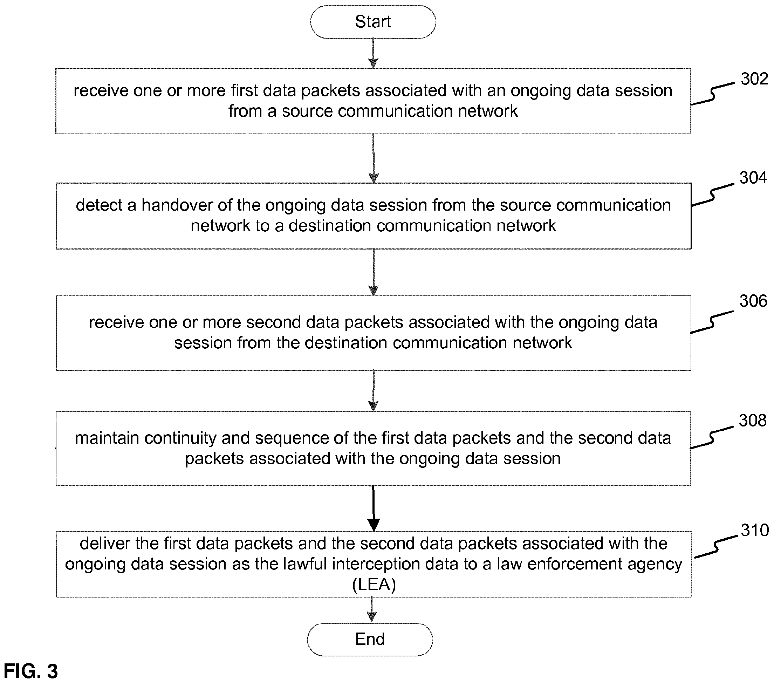

**FIG. 3** illustrates an exemplary flow diagram of a method of providing lawful interception continuity across one or more communication networks for an ongoing data session . The method may involve receiving, by the session continuity server device SCSD 102, one or more first data packets associated with an ongoing data session from a source communication network at step 302. The one or more first data packets associated with the ongoing data session may be at least one of signaling and media content. The ongoing data session may be initiated by a target user with a peer-user who may be present in the source communication network 106 or in a peer communication network 108. The source communication network 106 may contact data session control module 202 to obtain instructions regarding initiation of lawful interception (LI).The source communication network 106 may also send an identity of the source communication network 106 to SCSD 102. The SCSD 102 may determine the one or more network properties associated with the source communication network 106. The one or more network properties may be identity of a content duplication function (CDF), and/or capabilities of the source communication network 110. The SCSD 102 may send the identity of the source communication network 106 to SCSDC 120 to determine the capabilities of the source communication network 106, and the CDF for performing media content duplication for LI. The SCSDC 120 may send the one or more network properties such as identity of the CDF and the entity in the source communication network 106 controlling it, capabilities of the source communication network 106 and type of seamless data session mobility allowed based on the identity of the source communication network 106 back to the SCSD 102.

Upon receiving the one or more network properties associated with the source communication network 106, the SCSD 102 may determine the requirement to be in route of the lawful interception gateway. The data session control module 202 may determine the requirement to collect the one or more first data packets associated with the ongoing data session from the target user network and send it to the lawful interception gateway 104. The data session control module 202 may determine the requirement based on the one or more network properties associated with the source communication network 106. The Data session control Module 202 may determine that the one or more first data packets associated with the ongoing data session from the target user may be received by the SCSD 102 before being sent to the LIG. The SCSD 102 may indicate to the source communication network 106 to send the one or more first data packets associated with the ongoing data session of the target user to the SCSD 102. The SCSD 102 may also send the content duplication function (CDF) associated with the ongoing data session to the source communication network 106. Based on the indication by SCSD 102, the source communication network may send the one or more first data packets associated with the ongoing data session of the target user to SCSD 102.

After receiving the one or more first data packets associated with the ongoing data session from the source communication network at step 302, the SCSD 102 may detect a handover of the ongoing data session from the source communication network 106 to a destination communication network 110 at step 304. The ongoing data session may be handed over to the destination network 110. The handover may be due to reasons such as movement of the target user, offloading policy of the source communication network 106, changes in conditions of the source communication network 106. Upon the handover of the ongoing data session, the source communication network 106 contacts the SCSD 102 to obtain instructions regarding continuation of LI after the handover of the ongoing data session. The source communication network 106 may also send the identity of the destination communication network 110 to the SCSD 102. Upon receiving the identity of the destination communication network 110, the SCSD 102 may determine the one or more network properties associated with the destination communication network 110. The one or more network properties may be identity of a content duplication function (CDF), and/or capabilities of the destination communication network 110. The DSCM 202 in the SCSD 102 may send the identity of the destination communication network 110 to session continuity server device controller (SCSDC) 120 to determine the capabilities of the destination communication network 110, and a content duplication function for performing media content duplication for LI. The SCSDC 120 may send the one or more network properties such as identity of the content duplication function and the entity in the destination communication network 110 controlling it, and the capabilities of the destination communication network 110. At step 306 the SCSD 102 may receive one or more second data packets associated with the ongoing data session from the destination communication network in response to detecting the handover of the ongoing session. The SCSD 102 may send the content duplication function for the ongoing data session to the destination communication network 110. Based on the content duplication function, the destination communication network 110 may send the one or more second data packets associated with the ongoing data session from the target user to SCSD 102.

At step 308 the SCSD 102 may maintain continuity and sequence of the one or more first data packets and the one or more second data packets associated with the ongoing data session. The SCSD 102 may ensure that the one or more first data packets associated with the ongoing data session have been successfully received from the source communication network 106 entirely. The source communication network 106 may send an acknowledgement to the DSCM 202 that the one or more first data packets associated with the ongoing data session have been successfully sent to the SCSD 102. The acknowledgement may be sent by the source communication network based on one or more notifications associated with completion of sending of all available LI media and signaling content to the SCSD 102. The SCSD 102 may wait for a pre-configured time duration for the acknowledgement from the source communication network 106. Upon receiving the acknowledgement from the source communication network 106 or on expiry of the pre-configured time duration, if the SCSD 102 determines that one or more first data packets associated with the ongoing data session from the source communication network 106 is missing, the SCSD 102 retrieves such missing data packets from the source communication network 106. Before sending the acknowledgement, the source communication network 106 may retain the one or more first data packets associated with the ongoing data session for a pre-configured time to enable the SCSD 102 to retrieve any missing LI information in the one or more first data packets associated with the ongoing data session. The pre-configured time for which the source communication network 106 may retain the one or more first data packets associated with the ongoing data session is typically greater, for e.g., by at least 1-2 minutes than the pre-configured time duration for which the SCSD 102 waits for the acknowledgement from the source communication network 106. The signal handling module (SHM) 206 may ensure proper sequence of the packets and removing any duplicate content between the one or more first data packets and the one or more second data packets associated with the ongoing data session. The data traffic module (DTM) 204 may receive the LI media content in the one or more second data packets from the destination communication network 110. The DTM 204 may also receive any remaining LI media content in the one or more first data packets. The DTM 204 may ensure no missing LI media content between the one or more first data packets and the one or more second data packets due to the handover.

Upon maintaining continuity and sequence of the one or more first data packets and the one or more second data packets associated with the ongoing data session at step 308, the SCSD 102 may deliver the first data packets and the second data packets associated with the ongoing data session as the lawful interception data to a law enforcement agency (LEA) at step 310. The one or more first data packets and the one or more second data packets associated with the ongoing data session may be delivered to the LEA through the lawful interception gateway (LIG).

### Computer System

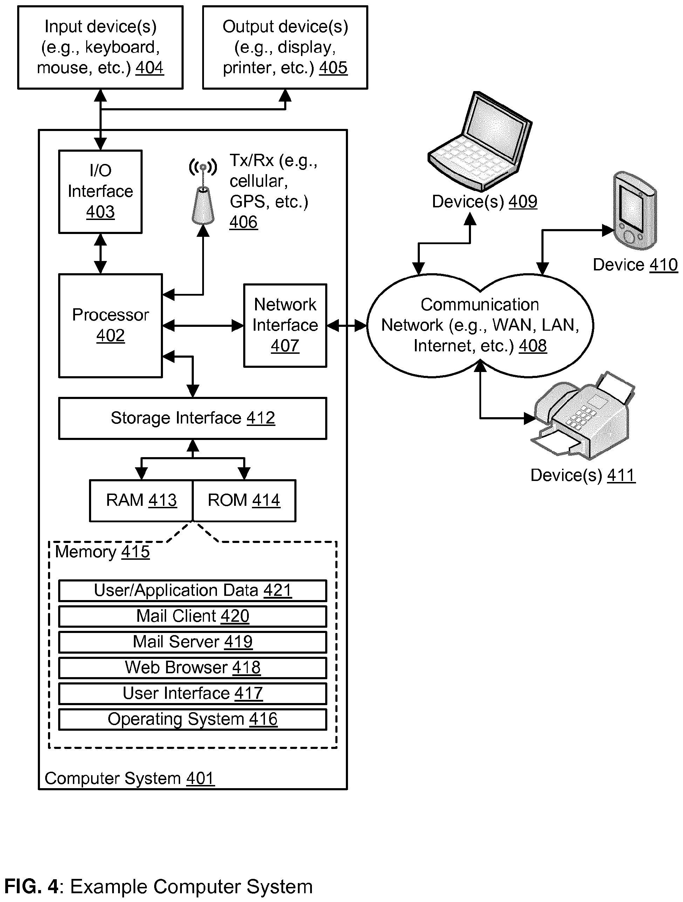

**FIG. 4** is a block diagram of an exemplary computer system for implementing embodiments consistent with the present disclosure. Variations of computer system 401 may be used for implementing a session continuity server device and session continuity server device controller 120. Computer system 401 may comprise a central processing unit ("CPU" or "processor") 402. Processor 402 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 408 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 410, 411, and 412. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described a system and method of improved lawful interception of seamless data session continuity across heterogeneous networks. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for providing a lawful interception continuity across one or more communication networks for an ongoing data session, the method comprising:
receiving (302), by a session continuity server device (102), one or more first data packets associated with the ongoing data session from a source communication network (106), wherein the one or more first data packets include at least one of signaling and media content;
detecting (304), by the session continuity server device (102), a handover of the ongoing data session from the source communication network (106) to a destination communication network (110);
receiving (306), by the session continuity server device (102), one or more second data packets associated with the ongoing data session from the destination communication network (110) in response to detecting the handover of the ongoing session, wherein the one or more second data packets include at least one of signaling and media content;
maintaining (308), by the session continuity server device (102), continuity and sequence of the one or more first data packets and the one or more second data packets associated with the ongoing data session, wherein maintaining comprises removing duplicate packets in the at least one of signaling and media content in the one or more first data packets and the one or more second data packets associated with the ongoing session; and
delivering (310), by the session continuity server device (102), the one or more first data packets and the one or more second data packets associated with the ongoing data session as the lawful interception data to a law enforcement agency, LEA.

2. The method of claim 1, wherein maintaining further comprises:
in response to determining that one or more first data packets associated with the ongoing session are missing, retrieving the missing one or more first data packets from the source communication network (106).

3. The method of claim 1 or 2, further comprising determining, by the session continuity server device (102), one or more network properties associated with the one or more communication networks.

4. The method of any one of claims 1 to 3, further comprising determining, by the session continuity server device (102), a requirement to be in route of the lawful interception gateway based on the one or more network properties associated with the one or more communication networks.

5. The method of any one of claims 1 to 4, wherein the destination communication network (110) and the source communication network (106) are heterogeneous communication networks.

6. The method of any one of claims 1 to 5, wherein the one or more first data packets and the one or more second data packets associated with the ongoing data session are delivered to the LEA through a lawful interception gateway (104).

7. The method of any one of claims 1 to 6, wherein the one or more first data packets and the one or more second data packets are delivered to the LEA in a format desired by the LEA.

8. A session continuity server device (102) comprising:
a memory (114);
a processor (112) coupled to the memory (114) storing processor executable instructions which when executed by the processor cause the processor to perform operations comprising:
receiving (302) one or more first data packets associated with an ongoing data session from a source communication network (106), wherein the one or more first data packets include at least one of signaling and media content;
detecting (304) a handover of the ongoing data session from the source communication network (106) to a destination communication network (110);
receiving (306) one or more second data packets associated with the ongoing data session from the destination communication network (110) in response to detecting the handover of the ongoing session, wherein the one or more second data packets include at least one of signaling and media content;
maintaining (308) continuity and sequence of the one or more first data packets and the one or more second data packets associated with the ongoing data session, wherein maintaining comprises removing duplicate packets in the at least one of signaling and media content in the one or more first data packets and the one or more second data packets associated with the ongoing session; and
delivering (310) the one or more first data packets and the one or more second data packets associated with the ongoing data session as the lawful interception data to a law enforcement agency, LEA.

9. The session continuity server device (102) of claim 8, wherein maintaining further comprises:
in response to determining that one or more first data packets associated with the ongoing session are missing, retrieving the missing one or more first data packets from the source communication network (106).

10. The session continuity server device (102) of claim 8 or 9, wherein the operations further comprise determining one or more network properties associated with the one or more communication networks.

11. The session continuity server device (102) of any one of claims 8 to 10 , wherein the operations further comprise determining a requirement to be in route of the lawful interception gateway based on the one or more network properties associated with the one or more communication networks.

12. The session continuity server device (102) of any one of claims 8 to 11, wherein the destination communication network (110) and the source communication network (106) are heterogeneous communication networks.

13. The session continuity server device (102) of any one of claims 8 to 12, wherein the one or more first data packets and the one or more second data packets associated with the ongoing data session are delivered to the LEA through a lawful interception gateway (104).

14. The session continuity server device of any one of claims 8 to 13, wherein the one or more first data packets and the one or more second data packets are delivered to the LEA in a format desired by the LEA.

15. A non-transitory computer readable medium including (114) instructions stored thereon that when processed by at least one processor (112) cause a lawful interception device to perform operations comprising the method any one of claims 1 to 7.

## Patentansprüche

1. Verfahren zum Bereitstellen einer legalen Abfangkontinuität über ein oder mehrere Kommunikationsnetzwerke für eine andauernde Datensitzung, wobei das Verfahren Folgendes umfasst:
Empfangen (302), durch eine Sitzungskontinuitäts-Servervorrichtung (102) von einem oder mehreren ersten Datenpaketen, die mit der andauernden Datensitzung assoziiert sind, von einem Ursprungskommunikationsnetzwerk (106), wobei das eine oder die mehreren ersten Datenpakete mindestens eines von Signalisierungs- und Medieninhalt beinhalten;
Erkennen (304), durch die Sitzungskontinuitäts-Servervorrichtung (102), eines Handovers der andauernden Datensitzung von dem Ursprungskommunikationsnetzwerk (106) zu einem Zielkommunikationsnetzwerk (110);
Empfangen (306), durch die Sitzungskontinuitäts-Servervorrichtung (102), von einem oder mehreren zweiten Datenpaketen, die mit der andauernden Datensitzung assoziiert sind, von dem Zielkommunikationsnetzwerk (110), als Reaktion auf das Erkennen des Handovers der andauernden Sitzung, wobei das eine oder die mehreren zweiten Datenpakete mindestens eines von Signalisierungs- und Medieninhalt beinhalten;
Aufrechterhalten (308), durch die Sitzungskontinuitäts-Servervorrichtung (102), der Kontinuität und Sequenz des einen oder der mehreren ersten Datenpakete und des einen oder der mehreren zweiten Datenpakete, die mit der andauernden Datensitzung assoziiert sind, wobei das Aufrechterhalten das Entfernen von doppelten Paketen in dem mindestens einen von Signalisierungs- und Medieninhalt in dem einen oder den mehreren ersten Datenpakten und dem einen oder den mehreren zweiten Datenpaketen, die mit der andauernden Sitzung assoziiert sind, umfasst; und
Senden (310), durch die Sitzungskontinuitäts-Servervorrichtung (102), des einen oder der mehreren ersten Datenpakete und des einen oder der mehreren zweiten Datenpakete, die mit der andauernden Datensitzung assoziiert sind, als die legalen Abfangdaten an eine Strafverfolgungsbehörde (LEA).

2. Verfahren nach Anspruch 1, wobei das Aufrechterhalten ferner Folgendes umfasst:
als Reaktion auf das Bestimmen, dass ein oder mehrere erste Datenpakete, die mit der andauernden Sitzung assoziiert sind, fehlen, Abrufen des fehlenden einen oder der fehlenden mehreren Datenpakete aus dem Ursprungskommunikationsnetzwerk (106).

3. Verfahren nach Anspruch 1 oder 2, ferner umfassend das Bestimmen, durch die Sitzungskontinuitäts-Servervorrichtung (102), einer oder mehrerer Netzwerkeigenschaften, die mit dem einen oder den mehreren Kommunikationsnetzwerken assoziiert sind.

4. Verfahren nach einem der Ansprüche 1 bis 3, ferner umfassend das Bestimmen, durch die Sitzungskontinuitäts-Servervorrichtung (102), einer Anforderung auf Grundlage der einen oder der mehreren Netzwerkeigenschaften, die mit dem einen oder den mehreren Kommunikationsnetzwerken assoziiert sind, durch das legale Abfang-Gateway geroutet zu werden.

5. Verfahren nach einem der Ansprüche 1 bis 4, wobei das Zielkommunikationsnetzwerk (110) und das Ursprungskommunikationsnetzwerk (106) heterogene Kommunikationsnetzwerke sind.

6. Verfahren nach einem der Ansprüche 1 bis 5, wobei das eine oder die mehreren ersten Datenpakete und das eine oder die mehreren zweiten Datenpakete, die mit der andauernden Datensitzung assoziiert sind, durch ein legales Abfang-Gateway (104) an die LEA gesendet werden.

7. Verfahren nach einem der Ansprüche 1 bis 6, wobei das eine oder die mehreren ersten Datenpakete oder das eine oder die mehreren zweiten Datenpakete in einem von der LEA gewünschten Format an die LEA gesendet werden.

8. Sitzungskontinuitäts-Servervorrichtung (102), Folgendes umfassend:
einen Speicher (114);
einen Prozessor (112), der mit dem Speicher (114) gekoppelt ist, der prozessorausführbare Anweisungen speichert, die bei Ausführung durch den Prozessor den Prozessor dazu veranlassen, Vorgänge durchzuführen, die Folgendes umfassen:
Empfangen (302) von einem oder mehreren ersten Datenpaketen, die mit einer andauernden Datensitzung assoziiert sind, von einem Ursprungskommunikationsnetzwerk (106), wobei das eine oder die mehreren ersten Datenpakete mindestens eines von Signalisierungs- und Medieninhalt beinhalten;
Erkennen (304) eines Handovers der andauernden Datensitzung von dem Ursprungskommunikationsnetzwerk (106) zu einem Zielkommunikationsnetzwerk (110);
Empfangen (306) von einem oder mehreren zweiten Datenpaketen, die mit der andauernden Datensitzung assoziiert sind, von dem Zielkommunikationsnetzwerk (110) als Reaktion auf das Erkennen des Handovers der andauernden Sitzung, wobei das eine oder die mehreren zweiten Datenpakete mindestens eines von Signalisierungs- und Medieninhalt beinhalten;
Aufrechterhalten (308) der Kontinuität und Sequenz des einen oder der mehreren ersten Datenpakete und des einen oder der mehreren zweiten Datenpakete, die mit der andauernden Datensitzung assoziiert sind, wobei das Aufrechterhalten das Entfernen von doppelten Paketen in dem mindestens einen von Signalisierungs- und Medieninhalt in dem einen oder den mehreren ersten Datenpakten und dem einen oder den mehreren zweiten Datenpaketen, die mit der andauernden Sitzung assoziiert sind, umfasst; und Senden (310) des einen oder der mehreren ersten Datenpakete und des einen oder der mehreren zweiten Datenpakete, die mit der andauernden Datensitzung assoziiert sind, als die legalen Abfangdaten an eine Strafverfolgungsbehörde (LEA).

9. Sitzungskontinuitäts-Servervorrichtung (102) nach Anspruch 8, wobei das Aufrechterhalten ferner Folgendes umfasst:
als Reaktion auf das Bestimmen, dass ein oder mehrere erste Datenpakete, die mit der andauernden Sitzung assoziiert sind, fehlen, Abrufen des fehlenden einen oder der fehlenden mehreren ersten Datenpakete aus dem Ursprungskommunikationsnetzwerk (106).

10. Sitzungskontinuitäts-Servervorrichtung (102) nach Anspruch 8 oder 9, wobei die Vorgänge ferner das Bestimmen einer oder mehrerer Netzwerkeigenschaften umfassen, die mit dem einen oder den mehreren Kommunikationsnetzwerken assoziiert sind.

11. Sitzungskontinuitäts-Servervorrichtung (102) nach einem der Ansprüche 8 bis 10, wobei die Vorgänge auf Grundlage der einen oder der mehreren Netzwerkeigenschaften, die mit dem einen oder den mehreren Kommunikationsnetzwerken assoziiert sind, ferner das Bestimmen einer Anforderung umfassen, durch das legale Abfang-Gateway geroutet zu werden.

12. Sitzungskontinuitäts-Servervorrichtung (102) nach einem der Ansprüche 8 bis 11, wobei das Zielkommunikationsnetzwerk (110) und das Ursprungskommunikationsnetzwerk (106) heterogene Kommunikationsnetzwerke sind.

13. Sitzungskontinuitäts-Servervorrichtung (102) nach einem der Ansprüche 8 bis 12, wobei das eine oder die mehreren ersten Datenpakete und das eine oder die mehreren zweiten Datenpakete, die mit der andauernden Datensitzung assoziiert sind, durch ein legales Abfang-Gateway (104) an die LEA gesendet werden.

14. Sitzungskontinuitäts-Servervorrichtung nach einem der Ansprüche 8 bis 13, wobei das eine oder die mehreren ersten Datenpakete und das eine oder die mehreren zweiten Datenpakete in einem von der LEA gewünschten Format an die LEA gesendet werden.

15. Nicht transitorisches computerlesbares Medium einschließlich (114) darauf gespeicherter Anweisungen, die, bei Verarbeitung durch mindestens einen Prozessor (112), eine legale Abfangvorrichtung dazu veranlassen, Vorgänge durchzuführen, die das Verfahren nach einem der Ansprüche 1 bis 7 umfassen.

## Revendications

1. Méthode d'exécution d'une continuité d'interception légale dans un ou plusieurs réseaux de communication pour une session de données en cours, la méthode comprenant :
la réception (302), par un dispositif de serveur de continuité de session (102), d'un réseau de communication source (106), d'un ou plusieurs premiers paquets de données associés à la session de données en cours, l'un ou plusieurs premiers paquets de données comprenant au moins un d'un contenu de signalisation et d'un contenu média ;
la détection (304), par un dispositif de serveur de continuité de session (102), d'un transfert de la session de données en cours du réseau de communication source (106) à un réseau de communication destinataire (110) ;
la réception (306), par le serveur de continuité de session (102), du réseau de communication destinataire (110), d'un ou de plusieurs deuxièmes paquets de données associés à la session de données en cours en réponse à la détection du transfert de la session en cours, l'un ou plusieurs deuxièmes paquets de données comprenant au moins un d'un contenu de signalisation et d'un contenu média ;
le maintien (308), par le serveur de continuité de session (102), de la continuité et de la séquence du ou de plusieurs premiers paquets de données et du ou plusieurs deuxièmes paquets de données associés à la session de données en cours, le maintien comprenant l'extraction de paquets dupliqués dans l'au moins un d'un contenu de signalisation et de contenu média dans le ou plusieurs premiers paquets de données et le ou plusieurs deuxièmes paquets de données associés à la session en cours ; et
la remise (310), par le serveur de continuité de session (102), du ou plusieurs premiers paquets de données et du ou plusieurs deuxièmes paquets de données associés à la session de données en cours en tant que données d'interception légale, à un organisme judiciaire, LEA.

2. Méthode selon la revendication 1, le maintien comprenant en outre :
en réponse à la détermination que manquent un ou plusieurs premiers paquets de données associés à la session de données en cours, la récupération du ou de plusieurs premiers paquets de données manquants dans le réseau de communication source (106).

3. Méthode selon la revendication 1 ou 2, comprenant en outre la détermination, par le serveur de continuité de session (102), d'une ou plusieurs propriétés de réseau associées avec l'un ou plusieurs réseaux de communication.

4. Méthode selon une quelconque des revendications 1 à 3, comprenant en outre la détermination, par le serveur de continuité de session (102), de la stipulation d'être dans la voie de la passerelle d'interception légale sur la base du ou de plusieurs propriétés de réseau associées à l'un ou plusieurs réseaux de communication.

5. Méthode selon une quelconque des revendications 1 à 4, le réseau de communication destinataire (110) et le réseau de communication source (106) étant des réseaux de communication hétérogènes.

6. Méthode selon une quelconque des revendications 1 à 5, le ou plusieurs premiers paquets de données et le ou plusieurs deuxièmes paquets de données associés à la session de données en cours étant transmis à LEA par le bais d'une passerelle d'interception légale (104).

7. Méthode selon une quelconque des revendications 1 à 6, le ou plusieurs premiers paquets de données et le ou plusieurs deuxièmes paquets de données étant remis à LEA dans un format désiré par le LEA.

8. Dispositif de serveur de continuité de session (102) comprenant :
une mémoire (114) ;
un processeur (112) couplé à la mémoire (114) stockant des instructions exécutables par un processeur, qui, lorsqu'elles sont exécutées par le processeur, déterminent l'exécution, par le processeur, d'opérations comprenant les suivantes :
la réception (302), d'un réseau de communication source (106), d'un ou plusieurs premiers paquets de données associés à la session de données en cours, l'un ou plusieurs premiers paquets de données comprenant au moins un d'un contenu de signalisation et d'un contenu de média ;
la détection (304) d'un transfert de la session de données en cours du réseau de communication source (106) à un réseau de communication destinataire (110) ;
la réception (306), du réseau de communication destinataire (110), d'un ou plusieurs deuxièmes paquets de données associés à la session de données en cours en réponse à la détection du transfert de la session en cours, l'un ou plusieurs deuxièmes paquets de données comprenant au moins un d'un contenu de signalisation et d'un contenu de média ;
le maintien (308) de la continuité et de la séquence du ou de plusieurs premiers paquets de données et du ou plusieurs deuxièmes paquets de données associés à la session de données en cours, le maintien comprenant l'extraction de paquets dupliqués dans l'au moins un d'un contenu de signalisation et d'un contenu média dans le ou plusieurs premiers paquets de données et le ou plusieurs deuxièmes paquets de données associés à la session de données en cours ; et
la remise (310) du ou plusieurs premiers paquets de données et du ou plusieurs deuxièmes paquets de données associés à la session de données en cours en tant que données d'interception légale, à un organisme judiciaire, LEA.

9. Dispositif de serveur de continuité de session (102) selon la revendication 8, le maintien comprenant en outre :
en réponse à la détermination que manquent un ou plusieurs premiers paquets de données associés à la session de données en cours, la récupération du ou de plusieurs premiers paquets de données manquants dans le réseau de communication source (106).

10. Dispositif de serveur de continuité de session (102) selon la revendication 8 ou 9, les opérations comprenant en outre la détermination d'une ou plusieurs propriétés de réseau associées au ou à plusieurs réseaux de communication.

11. Dispositif de serveur de continuité de session (102) selon une quelconque des revendications 8 à 10, les opérations comprenant en outre la détermination de la stipulation d'être dans la voie de la passerelle d'interception légale sur la base du ou de plusieurs propriétés de réseau associées à l'un ou plusieurs réseaux de communication.

12. Dispositif de serveur de continuité de session (102) selon une quelconque des revendications 8 à 11, le réseau de communication destinataire (110) et le réseau de communication source (106) étant des réseaux de communication hétérogènes.

13. Dispositif de serveur de continuité de session (102) selon une quelconque des revendications 8 à 12, le ou plusieurs premiers paquets de données et le ou plusieurs deuxièmes paquets de données associés à la session de données en cours sont remis à LEA par le bais d'une passerelle d'interception légale (104).

14. Dispositif de serveur de continuité de session selon une quelconque des revendications 8 à 13, le ou plusieurs premiers paquets de données et le ou plusieurs deuxièmes paquets de données étant transmis à LEA dans un format désiré par LEA.

15. Support non transitoire lisible par ordinateur sur lequel sont stockées (114) des instructions, qui, lorsque ces instructions sont traitées par au moins un processeur (112), donnent lieu à l'exécution, par une passerelle d'interception légale, d'opérations constituant la méthode selon une quelconque des revendications 1 à 7.
